# EUROPÄISCHE PATENTSCHRIFT

(11) **EP 0 860 968 B1**
(45) Veröffentlichungstag und Bekanntmachung des Hinweises auf die Patenterteilung: **18.05.2016**
(21) Anmeldenummer: 97119870.0
(22) Anmeldetag: 13.11.1997
(51) Int. Cl.: H04M 1/725

(54) **Funkgerät**
Radiotelephone
Radiotéléphone

(30) Priorität: 25.02.1997 DE 19707455
(43) Veröffentlichungstag der Anmeldung: 26.08.1998
(73) Patentinhaber: IPCom GmbH & Co. KG, 82049 Pullach (DE)
(72) Erfinder: Moeller, Stephan, 30519 Hannover (DE)
(74) Vertreter: Gigerich, Jan

(56) Entgegenhaltungen:
- EP-A- 0 590 492
- US-A- 5 247 700
- "NOKIA USER'S GUIDE" 1996 , NOKIA MOBILE PHONES XP002238645 * Seite 9 - Seite 13 * * Seite 48 - Seite 50 *

## Beschreibung

### Stand der Technik

Die Erfindung geht von einem Funkgerät nach der Gattung des Hauptanspruchs aus.

Funkgeräte mit einer Anzeigevorrichtung sind seit langem besonders im Mobilfunkbereich bekannt.

Der Nokia Users Guide, 1996, beschreibt ein Funkgerät, mit einer Anzeigevorrichtung, wobei ein erster Betriebsmodus vorgesehen ist, in dem an der Anzeigevorrichtung Bedienfunktionen des Funkgeräts und durch Aufruf mittels einer Taste Hilfetexte zu einer ausgewählten Bedienfunktion dargestellt werden.

### Vorteile der Erfindung

Das erfindungsgemäße Funkgerät mit den Merkmalen des Hauptanspruchs hat demgegenüber den Vorteil, daß eine Bedienungsanleitung des Funkgerätes bereits im Funkgerät selbst implementiert ist und an der Anzeigevorrichtung darstellbar ist. Auf diese Weise wird der Bedienkomfort für den Benutzer erhöht, da er nicht auf eine separate Bedienungsanleitung angewiesen ist. Eine in das Funkgerät implementierte Bedienungsanleitung ist außerdem immer verfügbar, wenn das Funkgerät benutzt wird und erfordert keinen zusätzlichen Platzbedarf. Weiterhin können Aufwand, Material und Kosten für eine separate Bedienungsanleitung eingespart werden. Die Implementierung einer Bedienungsanleitung in das Funkgerät ermöglicht dem Benutzer in vorteilhafter Weise eine schnellere und effektivere Handhabung der Bedienfunktionen des Funkgerätes.

Durch die in den Unteransprüchen aufgeführten Maßnahmen sind vorteilhafte Weiterbildungen und Verbesserungen des im Hauptanspruch angegebenen Funkgerätes möglich.

Vorteilhaft ist, daß der Aufruf der Bedienfunktionen in mindestens einem weiteren von dem ersten Betriebsmodus verschiedenen Betriebsmodus erfolgt. Auf diese Weise wird die Information des Benutzers über die Bedienung des Funkgerätes von der Bedienung des Funkgerätes selbst getrennt, so daß die Übersichtlichkeit für den Benutzer erhöht wird.

Vorteilhaft ist außerdem, daß das Einschalten des Funkgerätes die Aktivierung des ersten Betriebsmodus bewirkt. Auf diese Weise wird der Benutzer bei jeder Inbetriebnahme des Funkgerätes über die Möglichkeiten und Funktionen desselben informiert, was eine besonders komfortable und bedienerfreundliche Maßnahme darstellt.

Weiterhin ist es vorteilhaft, daß eine Taste vorgesehen ist, durch deren Betätigung eine Aktivierung des ersten Betriebsmodus erfolgt. Auf diese Weise kann der Benutzer jederzeit in den Betriebsmodus zur Anzeige der Bedienungsanleitung umschalten, wodurch am Funkgerät selbst jederzeit Hilfestellung für den Benutzer verfügbar ist, so daß der Bedienungskomfort durch diese Maßnahme weiter erhöht wird.

Vorteilhaft ist außerdem, daß die Darstellung der Bedienfunktionen in Form einer Menüstruktur an der Anzeigevorrichtung erfolgt. Auf diese Weise wird der Benutzer besonders übersichtlich über den Funktionsumfang des Funkgerätes informiert.

Vorteilhaft ist auch, daß eine Darstellung der einzelnen Bedienschritte zur Aktivierung der jeweiligen Bedienfunktion an der Anzeigevorrichtung erfolgt. Auf diese Weise wird die Häufigkeit von Fehlversuchen bei der Benutzung des Funkgerätes seitens des Benutzers erheblich verringert, da eine eindeutige und übersichtliche Bedienerführung gewährleistet wird.

Vorteilhaft ist weiterhin, daß durch entsprechende Eingabe an der Tastatur des Funkgerätes im ersten Betriebsmodus aus der an der Anzeigevorrichtung dargestellten Menüstruktur eine Bedienfunktion auswählbar ist und daß eine Darstellung der zu der gewählten Bedienfunktion gehörenden Bedienschritte an der Anzeigevorrichtung erfolgt. Auf diese Weise ist eine übersichtliche, komfortable und schnelle Möglichkeit gegeben, zu den Bedienfunktionen den jeweils zugehörigen Bedienvorgang an der Anzeigevorrichtung des Funkgerätes abzufragen.

Ein weiterer Vorteil besteht darin, daß im ersten Betriebsmodus eine aufeinanderfolgende Darstellung aller Bedienfunktionen und ihrer Bedienschritte an der Anzeigevorrichtung erfolgt. Auf diese Weise wird der Benutzer besonders schnell und übersichtlich über den Funktionsumfang und dessen Realisierung informiert.

Vorteilhaft ist auch, daß eine zyklische Wiederholung der Darstellung aller Bedienfunktionen und ihrer Bedienschritte so lange erfolgt, bis eine vorgegebene Zahl von Zyklen erreicht oder eine vorgegebene Zeit abgelaufen ist. Somit wird sichergestellt, daß der Benutzer genügend über den Funktionsumfang des Funkgerätes und dessen Realisierung informiert wird.

Ein weiterer Vorteil besteht darin, daß die zyklische Wiederholung der Darstellung aller Bedienfunktionen und ihrer Bedienschritte so lange erfolgt, bis die Betätigung einer weiterer Taste am Funkgerät erfolgt. Auf diese Weise kann der Benutzer selbst entscheiden, wann er genügend Informationen über den Funktionsumfang des Funkgerätes und dessen Realisierung erhalten hat.

### Zeichnung

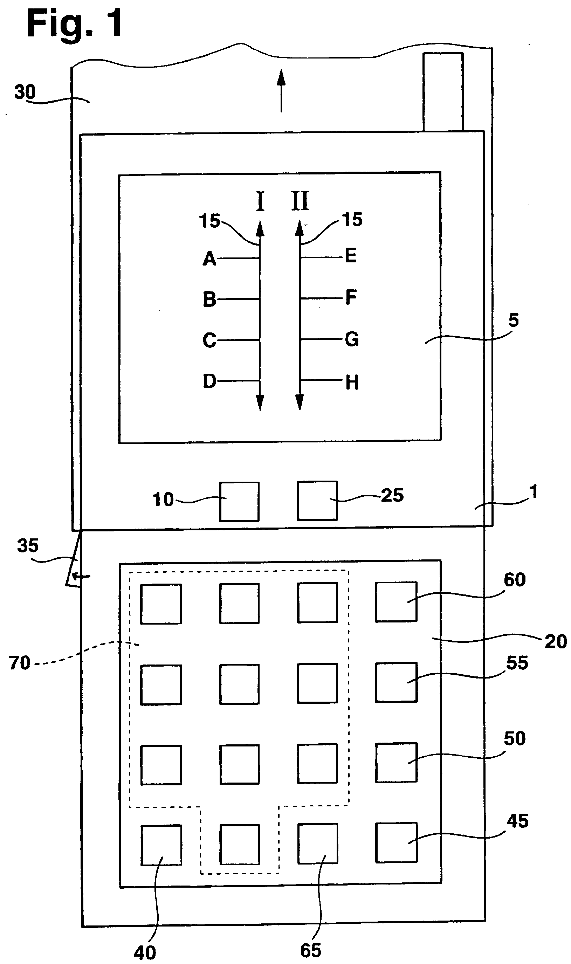

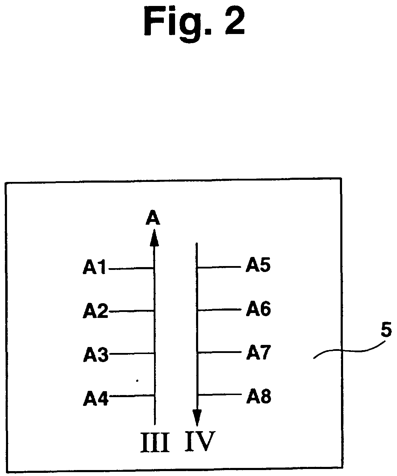

Ein Ausführungsbeispiel der Erfindung ist in der Zeichnung dargestellt und in der nachfolgenden Beschreibung näher erläutert. Es zeigen Figur 1 ein Funkgerät mit einer Anzeigevorrichtung, die eine Menüstruktur darstellt, und Figur 2 eine Anzeigevorrichtung, die einen Bedienvorgang darstellt.

### Beschreibung des Ausführungsbeispiels

In Figur 1 kennzeichnet 1 ein als Mobiltelefon ausgebildetes Funkgerät. Das Mobiltelefon 1 umfaßt in dem beschriebenen Ausführungsbeispiel eine 16er-Tastatur 20 und eine beispielsweise als Flüssigkristallanzeige ausgebildete Anzeigevorrichtung 5. Außerhalb der Tastatur 20 ist dabei eine erste Taste 10 und zweite Taste 25 vorgesehen.

Weiterhin weist das Mobiltelefon 1 seitlich einen Federkontakt 35 auf. Wird eine Schutzhülle 30 zur Aufbewahrung des Mobiltelefons 1 nach oben gemäß der Pfeilrichtung in Figur 1 abgezogen, so drückt der Federkontakt 35 seitlich nach außen, wie in Figur 1 ebenfalls durch einen Pfeil angedeutet wird. Auf diese Weise erfolgt ein Einschalten des Mobiltelefons 1. Zusätzlich kann die 16er-Tastatur 20 einen Ein-/Ausschalter 40 umfassen, mit dem das Mobiltelefon 1 eingeschaltet und ausgeschaltet werden kann. Das Mobiltelefon 1 kann durch Eindrücken des Federkontaktes 35 entgegen der Pfeilrichtung in Figur 1 zum Mobiltelefon 1 hin beim Einschieben des Mobiltelefons 1 in die Schutzhülle 30 wieder ausgeschaltet werden. Beim Einschalten des Mobiltelefons 1 durch den Federkontakt 35 oder den Ein-/Ausschalter 40 der 16er-Tastatur 20 wird ein erster Betriebsmodus aktiviert, der durch die Darstellung einer Menüstruktur 15 an der Anzeigevorrichtung 5 charakterisiert ist. Die Menüstruktur 15 ist dabei in einen mit I gekennzeichneten ersten Zweig und in einen mit II gekennzeichneten zweiten Zweig aufgeteilt. Die Menüstruktur 15 dient dabei der Darstellung der Bedienfunktionen des Mobiltelefons 1. Am ersten Zweig I der Menüstruktur 15 werden dabei Einstellmöglichkeiten des Mobiltelefons 1 in Form von weiteren Abzweigungen A, B, C und D dargestellt. Durch einen nach unten gerichteten Pfeil am ersten Zweig I kann dabei angedeutet werden, daß weitere Einstellungsmöglichkeiten vorgesehen sind, die beispielsweise durch Betätigung einer ersten Richtungstaste 45 der 16er-Tastatur 20 zur Darstellung an der Anzeigevorrichtung 5 gebracht werden können. Als Einstellungen A, B, C und D des Mobiltelefons 1 können beispielsweise Bedienfunktionen wie die Einstellung der Tonruffrequenz, der Tonruflautstärke, der Lautstärke des in Figur 1 nicht dargestellten Hörerlautsprechers, eine Stummschaltung des in Figur 1 nicht dargestellten Mikrophons oder dergleichen vorgesehen sein. Der zweite Zweig II der Menüstruktur 15 dient der Darstellung von vermittlungstechnischen Bedienfunktionen E, F, G und H, die in der Darstellung an der Anzeigevorrichtung 5 von diesem zweiten Zweig II abzweigen. Auch beim zweiten Zweig II kann durch einen nach unten gerichteten Pfeil an der Anzeigevorrichtung 5 angedeutet werden, daß durch Betätigung der ersten Richtungstaste 45 der 16er-Tastatur 20 weitere am Mobiltelefon 1 einstellbare vermittlungstechnische Funktionen an der Anzeigevorrichtung 5 zur Anzeige gebracht werden können. Als vermittlungstechnische Funktionen E, F, G und H können dabei beispielsweise Kurzwahl, Wahlwiederholung, Konferenzschaltung, Rufumleitung oder dergleichen vorgesehen sein. Durch einen nach oben gerichteten Pfeil am ersten Zweig I und am zweiten Zweig II der Menüstruktur 15 wird an der Anzeigevorrichtung 5 angedeutet, daß durch Betätigung einer zweiten Richtungstaste 50 aufgrund der begrenzten Fläche der Anzeigevorrichtung 5 nicht darstellbare Bedienfunktionen des Mobiltelefons 1 auch in entgegengesetzter Richtung zur Darstellung ausgewählt werden können. Bei dem beschriebenen Ausführungsbeispiel werden jedenfalls für den ersten Zweig I und den zweiten Zweig II der Menüstruktur 15 jeweils vier Bedienfunktionen gleichzeitig an der Anzeigevorrichtung 5 dargestellt. Bedienfunktionen, die durch Betätigung der ersten Richtungstaste 45 gemäß den nach unten weisenden Pfeilen des ersten und des zweiten Zweiges I, II zur Darstellung an der Anzeigevorrichtung 5 zugeschaltet wurden, führen daher zu einer Verschiebung der restlichen Bedienfunktionen in der Darstellung an der Anzeigevorrichtung 5 nach oben, wobei die an oberster Stelle stehenden Bedienfunktionen aus der Darstellung entfernt werden, da sie nicht weiter nach oben verschoben werden können. Ihre Darstellung kann dann durch Betätigung der zweiten Richtungstaste 50 in entsprechender Weise wieder hergestellt werden, so daß die bislang dargestellten Bedienfunktionen dann nach unten verschoben bzw. entfernt werden. Der Aufruf der im ersten Betriebsmodus an der Anzeigevorrichtung 5 dargestellten Bedienfunktionen des Mobiltelefons 1 erfolgt dabei in jeweils einem vom ersten Betriebsmodus verschiedenen Betriebsmodus.

Im ersten Betriebsmodus ist neben der Darstellung der Bedienfunktionen des Mobiltelefons 1 auch eine Darstellung des zu ihrer Aktivierung jeweils erforderlichen Bedienvorgangs möglich. Dazu sind neben der ersten Richtungstaste 45 und der zweiten Richtungstaste 50 eine dritte Richtungstaste 55 und eine vierte Richtungstaste 60 an der 16er-Tastatur 20 vorgesehen. Durch Betätigung der ersten Richtungstaste 45 wird in einem der beiden Zweige I, II jeweils zur gemäß der Darstellung an der Anzeigevorrichtung 5 nach unten benachbarten Funktion verzweigt. Durch Betätigung der zweiten Richtungstaste 50 wird entsprechend zur nach oben benachbarten Funktion verzweigt, durch Betätigung der dritten Richtungstaste 55 wird der zweite Zweig II ausgewählt und durch Betätigung der vierten Richtungstaste 60 wird der erste Zweig I ausgewählt. Durch entsprechende Betätigung der vier Richtungstasten 45, 50, 55, 60 kann somit eindeutig eine Bedienfunktion des ersten Zweiges I oder des zweiten Zweiges II ausgewählt werden. Durch eine Auswahltaste 65 an der 16er-Tastatur 20 werden die zu der mittels der Richtungstasten 45, 50, 55, 60 an der Anzeigevorrichtung 5 ausgewählten Bedienfunktion des Mobiltelefons 1 gehörenden Bedienschritte an der Anzeigevorrichtung 5 dargestellt. Gemäß Figur 2 des beschriebenen Ausführungsbeispiels wird die Bedienfunktion A ausgewählt. Dabei wird die Anzeigevorrichtung 5 nun vollständig zur Darstellung der für die Bedienfunktion A erforderlichen Bedienschritte verwendet. Diese Darstellung kann sich beispielsweise ebenfalls aus zwei Zweigen III und IV zusammensetzen, die jeweils weitere Verzweigungen zur Darstellung der erforderlichen Bedienschritte umfassen. So zweigen vom ersten Zweig III vier Bedienschritte A1, A2, A3 und A4 ab und vom zweiten Zweig IV zweigen ebenfalls vier Bedienschritte A5, A6, A7 und A8 ab. Dabei ist die Reihenfolge der nacheinander durchzuführenden Bedienschritte so dargestellt, daß zuerst die am ersten Zweig III aufgeführten Bedienschritte von oben nach unten gemäß der Darstellung an der Anzeigevorrichtung 5, das heißt von A1 bis A4 und anschließend die vom zweiten Zweig IV abzweigenden Bedienschritte A5 bis A8 ebenfalls von oben nach unten, gemäß der Darstellung an der Anzeigevorrichtung 5, durchgeführt werden. Erfordert eine Bedienfunktion mehr als die im beschriebenen Ausführungsbeispiel zur Anzeige an der Anzeigevorrichtung 5 gebrachten acht Bedienschritte, so kann durch Betätigung der ersten Richtungstaste 45 die Anzeige weiterer nachfolgend zu den dargestellten Bedienschritten auszuführende Bedienschritte als Abzweigung vom zweiten Zweig IV dargestellt werden. Die zuvor auszuführenden Bedienschritte rutschen dabei in der Darstellung an den beiden Zweigen III und IV entsprechend nach oben bzw. vom oberen Ende des zweiten Zweiges IV ans untere Ende des ersten Zweiges III, so daß jeweils acht nacheinander auszuführende Bedienschritte an der Anzeigevorrichtung 5 dargestellt sind. Die Anzeige nachfolgend auszuführender nicht dargestellter Bedienschritte wird durch einen nach unten gerichteten Pfeil am zweiten Zweig IV angedeutet und auf die Anzeige von nicht dargestellten zuvor auszuführenden Bedienschritten wird durch einen nach oben gerichteten Pfeil am ersten Zweig III hingewiesen. Die Darstellung von zuvor auszuführenden Bedienschritten wird dabei durch Betätigung der zweiten Richtungstaste 50 bewirkt. Dabei werden dann die nachfolgend auszuführenden Bedienschritte in der Darstellung an beiden Zweigen III und IV nach unten verschoben, bzw. vom unteren Ende des ersten Zweiges III ans obere Ende des zweiten Zweiges IV. Durch nochmaliges Betätigen der Auswahltaste 65 kann wieder auf die Darstellung der Menüstruktur 15 zurückverzweigt werden.

Der erste Betriebsmodus kann beispielsweise durch Betätigung einer weiteren bislang nicht beschriebenen Taste der 16er-Tastatur 20 verlassen werden. Die verbleibenden zehn Tasten der 16er-Tastatur 20 können dabei beispielsweise als 10er-Tastatur 70 ausgebildet sein. Durch Betätigung von Tasten der 10er-Tastatur 70 kann beispielsweise eine Rufnummer eingegeben werden, wodurch ausgehend vom ersten Betriebsmodus ein weiterer Betriebsmodus zur Anwahl eines Teilnehmers eingestellt wird. Dabei wird die Darstellung der Menüstruktur 15 bzw. die Darstellung der für eine Bedienfunktion auszuführenden Bedienschritte gemäß Figur 2 an der Anzeigevorrichtung 5 ersetzt durch die Rufnummer und gegebenenfalls den Namen des zu rufenden Teilnehmers. Aus jedem beliebigen Betriebsmodus kann der Benutzer durch Betätigung der ersten Taste 10 in den ersten Betriebsmodus umschalten, wobei dann entweder die zu dem zuvor eingestellten Betriebsmodus gehörende Abfolge der die zu realisierende Bedienfunktion repräsentierenden Bedienschritte gemäß Figur 2 an der Anzeigevorrichtung 5 dargestellt wird oder die Menüstruktur 15, wobei der Ausschnitt des ersten Zweiges I bzw. des zweiten Zweiges II so gewählt ist, daß diese Bedienfunktion auch zur Darstellung an der Anzeigevorrichtung 5 gebracht werden kann. Diese Bedienfunktion ist dabei gleichzeitig ausgewählt, so daß bei Betätigung der Auswahltaste 65 die zu der Bedienfunktion gehörenden Bedienschritte aufgerufen werden können. Die Auswahl einer Bedienfunktion an der Menüstruktur 15 kann dabei durch farbliche Hinterlegung des Schriftzuges oder auf andere geeignete Art und Weise erfolgen. Sind einzelne Bedienschritte gemäß der Darstellung nach Figur 2 in weitere Teilschritte untergliedert, so kann in analoger Weise mittels der Auswahltaste 65 auf eine Darstellung dieser Unterschritte verzweigt werden, deren Struktur der in Figur 2 dargestellten und zuvor beschriebenen Struktur entspricht. Durch nochmaliges Betätigen der Auswahltaste 65 kann wieder auf die vorherige Darstelluung zurückgeschaltet werden. Durch Betätigen der ersten Taste 10 kann der Benutzer jederzeit Hilfestellung für die Bedienung des aktuell eingestellten Betriebsmodus bzw. der dazugehörigen Bedienfunktion erhalten.

Weiterhin führt die Betätigung der ersten Taste 10 im ersten Betriebsmodus zu einer aufeinanderfolgenden abwechselnden Darstellung aller Bedienfunktionen und ihrer Bedienschritte an der Anzeigevorrichtung 5. Dabei wird jeweils von der Darstellung der Menüstruktur 15 gemäß Figur 1 auf die Darstellung der zu der gerade ausgewählten Bedienfunktion gehörenden Bedienschritte gemäß Figur 2 umgeschaltet. Nach Beendigung der Darstellung des Bedienvorgangs gemäß Figur 2 wird wieder auf die Menüstruktur 15 gemäß Figur 1 umgeschaltet und die nachfolgende Bedienfunktion ausgewählt. Danach erfolgt wiederum eine Umschaltung auf die Darstellung des zugehörigen Bedienvorgangs gemäß Figur 2 usw.

Weiterhin ist eine zyklische Wiederholung der Darstellung aller Bedienfunktionen und ihrer Bedienschritte vorgesehen, die so lange anhält, bis eine vorgegebene Zahl von Zyklen erreicht ist oder eine vorgegebene Zeit abgelaufen ist. Durch Betätigung der zweiten Taste 25 kann die zyklische Wiederholung der Darstellung aller Bedienfunktionen und ihrer Bedienschritte abgebrochen werden. Erfordert ein gemäß Figur 2 dargestellter Bedienvorgang bei einzelnen Bedienschritten Teilschritte, so erfolgt auch jeweils eine Umschaltung der Anzeigevorrichtung 5 zwischen der Darstellung des Bedienvorgangs gemäß Figur 2 und einer Darstellung der zu einem Bedienschritt gehörenden Teilschritte, wobei erst nach entsprechender Abhandlung aller Bedienschritte einer Bedienfunktion wieder auf die Darstellung der Menüstruktur 15 gemäß Figur 1 zurückgeschaltet werden kann.

Die Erfindung ist nicht auf das beschriebene Ausführungsbeispiel beschränkt, wobei insbesondere die Darstellung der Bedienfunktionen des Mobiltelefons und ihres jeweiligen Bedienvorgangs auch in anderer als der beschriebenen Weise ausgeführt sein kann. Auch ist die Erfindung nicht auf Mobiltelefone beschränkt, sondern generell auf alle Arten von Funkgeräten, beispielsweise auch für Schnurlostelefone anwendbar.

## Patentansprüche

1. Funkgerät (1), mit einer Anzeigevorrichtung (5), bei welchem ein erster Betriebsmodus vorgesehen ist, in dem an der Anzeigevorrichtung (5) Bedienfunktionen des Funkgeräts (1) und der zur Aktivierung jeweils erforderliche Bedienvorgang darstellbar sind, **dadurch gekennzeichnet, dass** durch Betätigen einer Taste der Tastatur des Funkgeräts zur Eingabe einer Rufnummer die Darstellung an der Anzeigevorrichtung (5) zumindest durch die eingegebene Rufnummer ersetzt wird.

2. Funkgerät (1) nach Anspruch 1, **dadurch gekennzeichnet, daß** der Aufruf der Bedienfunktionen in mindestens einem weiteren von dem ersten Betriebsmodus verschiedenen Betriebsmodus erfolgt.

3. Funkgerät (1) nach Anspruch 1 oder 2, **dadurch gekennzeichnet, daß** das Einschalten des Funkgerätes (1) die Aktivierung des ersten Betriebsmodus bewirkt.

4. Funkgerät (1) nach Anspruch 1, 2 oder 3, **dadurch gekennzeichnet, daß** eine Taste (10) vorgesehen ist, durch deren Betätigung eine Aktivierung des ersten Betriebsmodus erfolgt.

5. Funkgerät (1) nach einem der vorherigen Ansprüche, **dadurch gekennzeichnet, daß** die Darstellung der Bedienfunktionen in Form einer Menüstruktur (15) an der Anzeigevorrichtung (5) erfolgt.

6. Funkgerät (1) nach einem der vorherigen Ansprüche, **dadurch gekennzeichnet, daß** eine Darstellung der einzelnen Bedienschritte zur Aktivierung der jeweiligen Bedienfunktion an der Anzeigevorrichtung (5) erfolgt.

7. Funkgerät (1) nach einem der vorherigen Ansprüche, **dadurch gekennzeichnet, daß** durch entsprechende Eingabe an einer Tastatur (20) des Funkgerätes (1) im ersten Betriebsmodus aus der an der Anzeigevorrichtung (5) dargestellten Menüstruktur (15) eine Bedienfunktion auswählbar ist und daß eine Darstellung der zu der gewählten Bedienfunktion gehörenden Bedienschritte an der Anzeigevorrichtung (5) erfolgt.

8. Funkgerät (1) nach einem der vorherigen Ansprüche, **dadurch gekennzeichnet, daß** im ersten Betriebsmodus eine aufeinanderfolgende Darstellung aller Bedienfunktionen und ihrer Bedienschritte an der Anzeigevorrichtung (5) erfolgt.

9. Funkgerät (1) nach Anspruch 8, **dadurch gekennzeichnet, daß** eine zyklische Wiederholung der Darstellung aller Bedienfunktionen und ihrer Bedienschritte so lange erfolgt, bis eine vorgegebene Zahl von Zyklen erreicht oder eine vorgegebene Zeit abgelaufen ist.

10. Funkgerät (1) nach Anspruch 8 oder 9, **dadurch gekennzeichnet, daß** die zyklische Wiederholung der Darstellung aller Bedienfunktionen und ihrer Bedienschritte so lange erfolgt, bis die Betätigung einer weiteren Taste (25) am Funkgerät (1) erfolgt.

## Claims

1. Radio device (1) having a display apparatus (5), in which a first operating mode is provided, in which operating functions of the radio device (1) and the operating process respectively required for activation can be displayed on the display apparatus (5), **characterized in that** actuation of a key on the keypad of the radio device for inputting a telephone number results in the display on the display apparatus (5) being replaced at least with the telephone number which has been input.

2. Radio device (1) according to Claim 1, **characterized in that** the operating functions are called in at least one further operating mode different from the first operating mode.

3. Radio device (1) according to Claim 1 or 2, **characterized in that** the switching-on of the radio device (1) causes activation of the first operating mode.

4. Radio device (1) according to Claim 1, 2 or 3, **characterized in that** a key (10) is provided, the actuation of which activates the first operating mode.

5. Radio device (1) according to one of the preceding claims, **characterized in that** the operating functions are displayed on the display apparatus (5) in the form of a menu structure (15).

6. Radio device (1) according to one of the preceding claims, **characterized in that** the individual operating steps for activating the respective operating function are displayed on the display apparatus (5).

7. Radio device (1) according to one of the preceding claims, **characterized in that** an operating function can be selected from the menu structure (15) displayed on the display apparatus (5) by means of a corresponding input on a keypad (20) of the radio device (1) in the first operating mode, and **in that** the operating steps belonging to the selected operating function are displayed on the display apparatus (5).

8. Radio device (1) according to one of the preceding claims, **characterized in that** all operating functions and their operating steps are successively displayed on the display apparatus (5) in the first operating mode.

9. Radio device (1) according to Claim 8, **characterized in that** the display of all operating functions and their operating steps is cyclically repeated until a predefined number of cycles has been reached or a predefined time has elapsed.

10. Radio device (1) according to Claim 8 or 9, **characterized in that** the display of all operating functions and their operating steps is cyclically repeated until a further key (25) on the radio device (1) is actuated.

## Revendications

1. Radiotéléphone (1) comportant un dispositif d'affichage (5), dans lequel il est prévu un premier mode de fonctionnement dans lequel des fonctions de commande du radiotéléphone (1) et le processus de commande respectivement nécessaire pour l'activation peuvent être représentés sur le dispositif d'affichage (5), **caractérisé en ce que**, par actionnement d'une touche du clavier du radiotéléphone afin de saisir un numéro d'appel, la représentation effectuée sur le dispositif d'affichage (5) est au moins remplacée par le numéro d'appel saisi.

2. Radiotéléphone (1) selon la revendication 1, **caractérisé en ce que** l'appel aux fonctions de commande s'effectue dans au moins un autre mode de fonctionnement différent du premier mode de fonctionnement.

3. Radiotéléphone (1) selon la revendication 1 ou 2, **caractérisé en ce que** la mise en fonctionnement du radiotéléphone (1) provoque l'activation du premier mode de fonctionnement.

4. Radiotéléphone (1) selon la revendication 1, 2 ou 3, **caractérisé en ce qu'**il est prévu une touche (10) dont l'actionnement conduit à une activation du premier mode de fonctionnement.

5. Radiotéléphone (1) selon l'une quelconque des revendications précédentes, **caractérisé en ce que** la représentation des fonctions de commande s'effectue sous la forme d'une structure de menu (15) sur le dispositif d'affichage (5).

6. Radiotéléphone (1) selon l'une quelconque des revendications précédentes, **caractérisé en ce qu'**une représentation des étapes de commande destinées à l'activation de la fonction de commande respective est effectuée sur le dispositif d'affichage (5).

7. Radiotéléphone (1) selon l'une quelconque des revendications précédentes, **caractérisé en ce qu'**une fonction de commande peut être sélectionnée à partir de la structure de menu (15) représentée sur le dispositif d'affichage (5) par une saisie correspondante sur un clavier (20) du radiotéléphone (1) dans le premier mode de fonctionnement et **en ce qu'**une représentation des étapes de commande correspondant à la fonction de commande sélectionnée est effectuée sur le dispositif d'affichage (5).

8. Radiotéléphone (1) selon l'une quelconque des revendications précédentes, **caractérisé en ce que**, dans le premier mode de fonctionnement, une représentation séquentielle de toutes les fonctions de commande et de leurs étapes de commande est effectuée sur le dispositif d'affichage (5).

9. Radiotéléphone (1) selon la revendication 8, **caractérisé en ce qu'**une répétition cyclique de la représentation de toutes les fonctions de commande et de leurs étapes de commande est effectuée jusqu'à ce qu'un nombre prédéterminé de cycles soit atteint ou qu'un temps prédéterminé se soit écoulé.

10. Radiotéléphone (1) selon la revendication 8 ou 9, **caractérisé en ce que** la répétition cyclique de la représentation de toutes les fonctions de commande et de leurs étapes de commande est effectuée jusqu'à ce que l'actionnement d'une autre touche (25) soit effectué sur le radiotéléphone (1).
